# EUROPÄISCHE PATENTSCHRIFT

(11) **EP 0 751 332 B1**
(45) Veröffentlichungstag und Bekanntmachung des Hinweises auf die Patenterteilung: **30.09.1998**
(21) Anmeldenummer: 96107139.6
(22) Anmeldetag: 07.05.1996
(51) Int. Cl.: F16L 37/088

(54) **Steckkupplung für Druckmittelsysteme**
Plug connector for pressure systems
Raccord emboîtable pour systèmes sous pression

(30) Priorität: 30.06.1995 DE 19523831
(43) Veröffentlichungstag der Anmeldung: 02.01.1997
(73) Patentinhaber: Armaturenfabrik Hermann Voss GmbH + Co., 51688 Wipperfürth (DE)
(72) Erfinder: Goller, Bernd, 51688 Wipperfürth (DE)
(74) Vertreter: Patentanwälte Dr. Solf & Zapf

(56) Entgegenhaltungen:
- EP-A- 0 226 689
- EP-A- 0 647 803
- GB-A- 799 155
- US-A- 3 718 350

## Beschreibung

Die vorliegende Erfindung betrifft eine Steckkupplung für Druckmittelsysteme, bestehend aus einem Gehäuseteil und einem Steckerteil, wobei das Steckerteil mit einem Steckerschaft über mindestens eine Umfangsdichtung abgedichtet in eine Aufnahmeöffnung des Gehäuseteils einsteckbar und über eine Verriegelungseinrichtung gegen Lösen arretierbar ist, wobei die Verriegelungseinrichtung derart ausgebildet ist, daß gehäuseseitig eine teilgesteckte Vorraststellung, welche einer ersten Rastausnehmung zugeordnet ist, und eine ganz gesteckte Vollraststellung, welche einer zweiten Rastausnehmung zugeordnet ist, gewährleistet sind, wobei in der Vorraststellung eine derart unvollständige Abdichtung vorliegt, daß im Falle einer Druckbeaufschlagung mit einem Druckmedium ein Signal, insbesondere ein akustisch wahrnehmbares Leckgeräusch, erzeugt wird, und wobei in der Vollraststellung eine vollständige, druckdichte Abdichtung vorliegt, und die Verriegelungseinrichtung steckerteilseitig aus einem in einer Außenringnut des Steckerschaftes sitzenden, elastisch verformbaren Halteelement besteht, wobei das Halteelement zumindest für die Vorraststellung vorgesehen ist und dazu rastend mit der ersten Rastausnehmung zusammenwirkt Derartige Steckkupplungen werden beispielsweise in Kraftfahrzeug-Bremssystemen, insbesondere bei LKW-Luftdruckbremsanlagen, eingesetzt. Speziell (aber natürlich nicht nur) bei diesem Anwendungsfall besteht das Problem, daß in manchen Fällen, z.B. bei ungünstigen Platzverhältnissen bzw. Einbausituationen, vom Monteur beim Stecken nicht sorgfältig genug auf ein korrektes, vollständiges Stecken geachtet wird, so daß in der Praxis Prüfvorgänge eingeschaltet werden müssen, um zu verhindern, daß bei einer Druckbeaufschlagung, beispielsweise beim Aufbau von Brems- druck, die Kupplung plötzlich ungewollt getrennt wird.

Aus der EP-B1-0 226 689 ist eine gattungsgemäße "Kupplungsvorrichtung" bekannt, bei der zur Vermeidung der beschriebenen Probleme schon im noch nicht ganz korrekt gesteckten Zustand der Kupplungsteile eine "Vorrastung" gewährleistet ist, die es verhindert, daß bei Druckbeaufschlagung die Kupplung ganz getrennt wird. Dabei ist in dieser Vorraststellung eine Undichtigkeit derart gewährleistet, daß dieser Zustand akustisch durch ein Leckgeräusch wahrnehmbar ist, ohne daß es zu einem vollständigen, plötzlichen Druckabfall kommen kann. Die Kupplung kann dann bei Auftreten des Leckgeräusches weiter in die korrekt abgedichtete und arretierte "Vollraststellung" überführt werden. Bei der bekannten Kupplungsvorrichtung ist ein aus im Querschnitt kreisförmigem Federdraht gebogener Verriegelungsring nach Art eines Drahtsprengringes vorgesehen, der in einer ersten Ausführungsform in einer Aussparung des Gehäuseteils, dort "Mutterstück" genannt, angeordnet ist und für Vor- und Vollraststellung nacheinander mit zwei separaten, ringnutförmigen Ausnehmungen des Steckerteils, dort "Gegenstück" genannt, zusammenwirkt. In einer zweiten Ausführungsform ist der Verriegelungsring auf dem Stecker (Gegenstück) angeordnet und wirkt mit zwei ringnutförmigen Aussparungen im Gehäuseteil (Mutterstück) zusammen. Die jeweils zwei mit dem Verriegelungsring zusammenwirkenden Aussparungen führen zu einer herstellungsmäßig recht aufwendigen Kontur, zumal zum Überführen von der Vorrastung in die Vollrastung jeweils die eine, erste Aussparung eine "schräge Führungsoberfläche" aufweisen muß. Außerdem treten bei Drahtsprengringen Nachteile bezüglich der Steckkräfte sowie Zentrierungsprobleme auf.

Der vorliegenden Erfindung liegt die Aufgabe zugrunde, eine gattungsgemäße Steckkupplung zu schaffen, die bei konstruktiv einfacher und herstellungsmäßig kostengünstiger Ausgestaltung verbesserte Steck- und Arretierungseigenschaften aufweist.

Erfindungsgemäß wird dies dadurch erreicht, daß die erste Rastausnehmung gehäuseteilseitig aus einer ersten, den Querschnitt der Aufnahmeöffnung erweiternden, der Vorraststellung zugeordneten Raststufe und die zweite Rastausnehmung aus einer zweiten, den Querschnitt der Aufnahmeöffnung ausgehend vom durch die erste Raststufe (16) erweiterten Querschnitt nochmals erweiternden, der Vollraststellung zugeordneten Raststufe besteht.

Durch diese vorteilhafte Ausgestaltung vereinfacht sich das Gehäuseteil bezüglich der Kontur der Aufnahmeöffnung, da lediglich die zwei in Steckrichtung beabstandeten Raststufen vorgesehen sind, ohne daß nutartige Ausnehmungen mit "schrägen Führungsflächen" erforderlich wären. Dennoch ist in einer ersten Ausführungsform der Erfindung vorteilhafterweise lediglich ein Halteelement ausreichend, und zwar das in der Außenringnut des Steckerschaftes sitzende, vorzugsweise als radialelastische Halteringklammer ausgebildete Halteelement, das hierzu ausgehend von der Vorraststellung durch weitergehendes Stecken in der Vollraststellung rastend mit der zweiten Raststufe des Gehäuseteils zusammenwirkt. Dies bedeutet, daß sich die Halteringklammer beim Einstecken zunächst elastisch verengt und sich dann in der Vorraststellung um ein erstes radiales Maß die erste Raststufe hintergreifend spreizt (auffedert), und nach weitergehendem Einstecken hintergreift dann die gleiche Halteringklammer durch weitergehendes radiales Aufspreizen die zweite Raststufe in der Vollraststellung.

In einer zweiten Ausführungsform der Erfindung kann alternativ dazu vorgesehen sein, daß für die Vollraststellung ein zweites, bevorzugt ebenfalls als radialelastische Halteringklammer ausgebildetes Halteelement vorgesehen ist, das innerhalb des Gehäuseteils zur Abstützung an der zweiten Raststufe gelagert ist und in der Vollraststellung mit einer zweiten Außenringnut des Steckerschaftes rastend zusammenwirkt. In der Vollraststellung befindet sich dann das erste Halteelement des Steckerschaftes im Bereich zwischen der ersten Raststufe und der zweiten Raststufe.

Die bevorzugt vorgesehene Halteringklammer bzw. jede der beiden vorgesehenen Halteringklammern ist mit Vorteil als Kunststoff-Formteil ausgebildet und daher sehr wirtschaftlich herstellbar. Zudem lassen sich durch eine spezielle formmäßige Ausgestaltung, die im folgenden noch genauer erläutert werden wird, auf einfache Weise auch besonders günstige Rast- bzw. Arretiereigenschaften erreichen.

In weiteren Unteransprüchen sowie auch in der nachfolgenden Beschreibung sind noch weitere vorteilhafte Ausgestaltungsmerkmale der Erfindung enthalten.

Anhand von in der Zeichnung dargestellten Ausführungsbeispielen und bestimmten Ausführungsvarianten soll im folgenden die Erfindung näher erläutert werden. Dabei zeigen:
- Fig. 1: einen Halb-Axialschnitt durch eine erfindungsgemäße Steckkupplung in einer ersten Ausführungsform in einem Zustand vor dem Einstecken,
- Fig. 2: einen Halb-Axialschnitt durch die erfindungsgemäße Steckkupplung in der ersten Ausführungsform gemäß Fig. 1 in der Vorraststellung,
- Fig. 3: eine Ansicht analog zu Fig. 1 und 2 der ersten Ausführungsform der Steckkupplung in der Vollraststellung,
- Fig. 4: eine halbgeschnittene Seitenansicht einer erfindungsgemäßen Steckkupplung in einer zweiten Ausführungsform in einem Zustand beim beginnenden Einstecken,
- Fig. 5: eine Ansicht analog zu Fig. 4 in der Vorraststellung,
- Fig. 6: eine Ansicht analog zu Fig. 4 und 5 in der Vollraststellung,
- Fig. 7 und 8: weitere Ausführungsvarianten der Steckkupplung, wobei jeweils in der linken Figurenhälfte die Vollraststellung und rechts die Vorraststellung dargestellt sind.

In den verschiedenen Figuren der Zeichnung sind gleiche Teile stets mit den gleichen Bezugszeichen versehen und werden daher in der Regel auch jeweils nur einmal beschrieben.

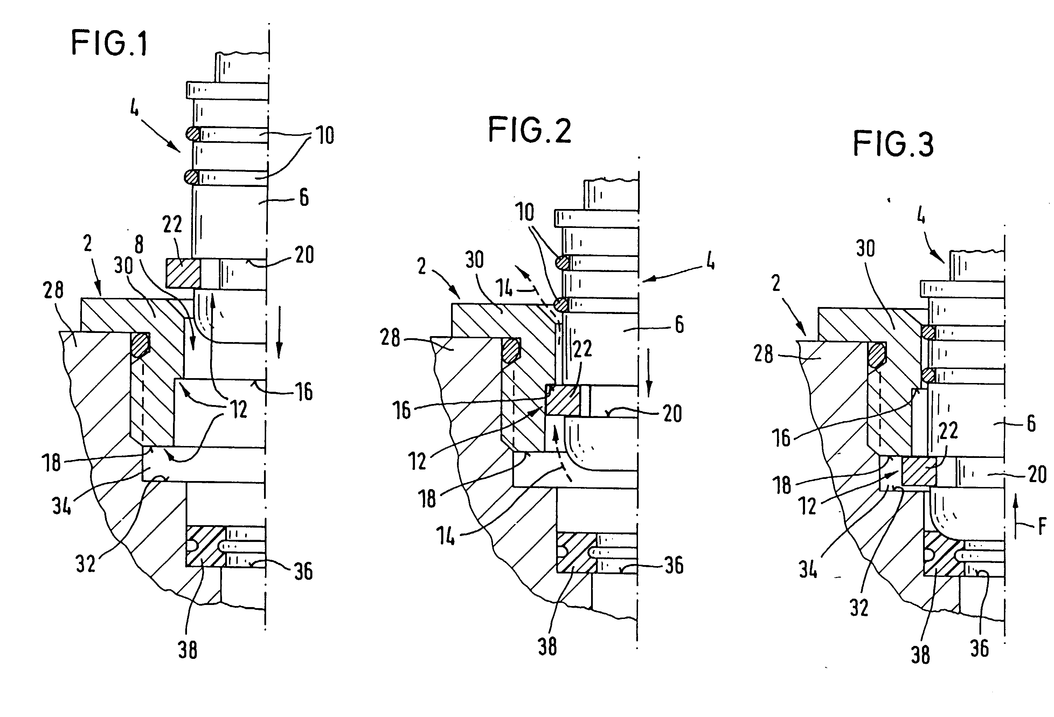

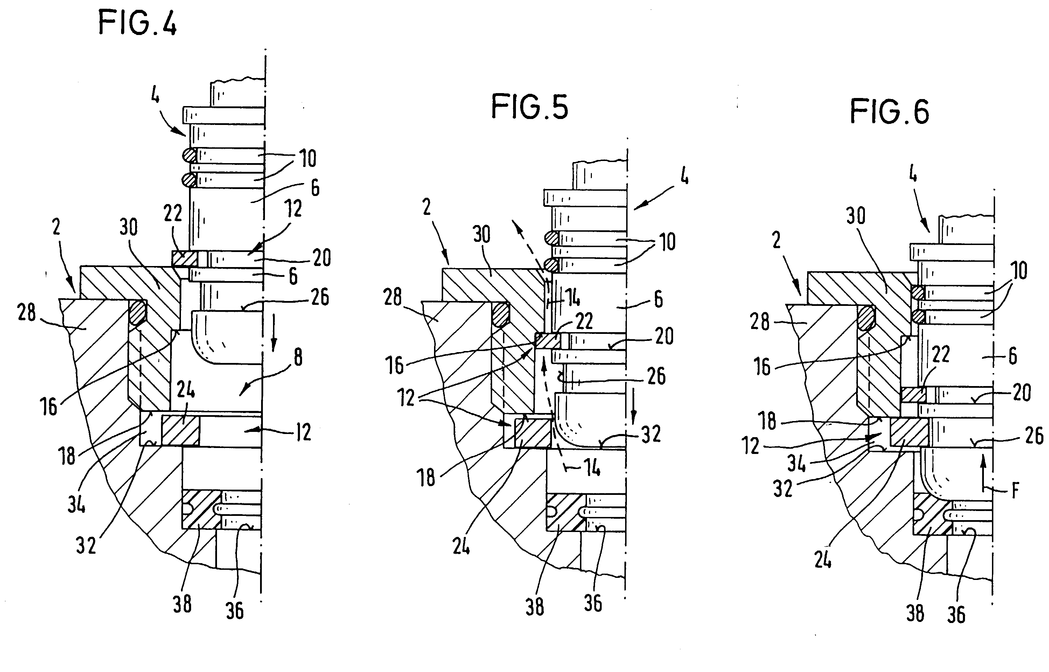

Wie sich einerseits aus den Fig. 1 bis 3 sowie andererseits aus den Fig. 4 bis 6 ergibt, besteht eine erfindungsgemäße Steckkupplung aus einem Gehäuseteil 2 und einem Steckerteil 4. Das Steckerteil 4 ist mit einem Steckerschaft 6 in eine Aufnahmeöffnung 8 des Gehäuseteils 2 einsteckbar und hierbei über mindestens eine Umfangsdichtung 10 - in den dargestellten Ausführungsbeispielen sind jeweils zwei Umfangsdichtungen 10 vorgesehen - gegen die Aufnahmeöffnung 8 abgedichtet sowie über eine Verriegelungseinrichtung 12 gegen Lösen arretierbar. Die Verriegelungseinrichtung 12 ist derart ausgebildet, daß einerseits eine teilgesteckte Vorraststellung (Fig.2; Fig.4) und andererseits eine ganz gesteckte Vollraststellung (Fig.3; Fig.6) gewährleistet sind. In der bereits gegen Lösen arretierten Vorraststellung liegt eine derart unvollständige Abdichtung vor, daß im Falle einer Druckbeaufschlagung mit einem Druckmedium, insbesondere Druckluft, ein akustisch wahrnehmbares Leckgeräusch erzeugt wird. Es handelt sich hierbei um eine definiert begrenzte Undichtigkeit bzw. eine durch die Anordnung der Umfangsdichtung(en) 10 relativ zum Gehäuseteil 2 bewirkte Bildung eines "Drosselspaltes", wodurch das Druckmedium entsprechend der gestrichelten Pfeile 14 dosiert ausströmt und dabei das Leckgeräusch insbesondere als Pfeifen, Zischen oder dergleichen, erzeugt. Dies kann dann als Signal dafür gewertet werden, daß noch nicht die korrekt gesteckte Vollraststellung erreicht ist, so daß in diesem Fall ausgehend von der Vorraststellung die Steckkupplung durch weitergehendes Stecken in die Vollraststellung überführt werden kann.

Erfindungsgemäß besteht nun die Verriegelungseinrichtung 12 einerseits - auf der Seite des Gehäuseteils 2 - aus einer ersten, den einstecköffnungsseitigen Querschnitt der Aufnahmeöffnung 8 erweiternden, der Vorraststellung (Fig. 2, 5) zugeordneten Raststufe 16 und einer zweiten, den Querschnitt der Aufnahmeöffnung 8 - ausgehend vom bereits durch die erste Raststufe 16 erweiterten Querschnitt - nochmals erweiternden, der Vollraststellung (Fig. 3,6) zugeordneten Raststufe 18. Die Verriegelungseinrichtung 12 besteht andererseits - auf der Seite des Steckerteils 4 - aus einer in einer Außenringnut 20 des Steckerschaftes 6 gehaltenen, radialelastischen Halteringklammer 22 oder dergleichen elastisch verformbaren Halteelement, welches zumindest für die Vorraststellung (Fig. 2,5) vorgesehen ist und dazu rastend mit der ersten Raststufe 16 zusammenwirkt (s. Fig. 2 und 5).

Bei der in den Fig. 1 bis 3 veranschaulichten, ersten Ausführungsform der Erfindung ist das Halteelement bzw. die Halteringklammer 22 des Steckerteils 4 zusätzlich auch für die Vollraststellung (Fig.3) vorgesehen. Dazu wirkt die Halteringklammer 22 ausgehend von der Vorraststellung (Fig. 2) durch weitergehendes Stecken rastend mit der zweiten Raststufe 18 zusammen.

Bei der zweiten Ausführungsform gemäß Fig. 4 bis 6 ist demgegenüber für die Vollraststellung (Fig. 6) eine zweite radialelastische Halteringklammer 24 oder dergleichen Halteelement vorgesehen, die hierzu innerhalb des Gehäuseteils 2 derart gelagert ist, daß sie sich zur Arretierung des Steckerteils 2 in axialer Richtung an der zweiten Raststufe 18 abstützen kann. Diese zweite Halteringklammer 24 wirkt dann in der Vollraststellung (Fig. 6) mit einer zweiten Außenringnut 26 des Steckerschaftes 6 rastend zusammen, indem sie zunächst durch den Steckerschaft 6 radial nach außen gespreizt wird, bis sie in die zweite Außenringnut 26 radial nach innen bereichsweise eingreifen kann. In dieser Stellung (Fig. 6) befindet sich dann die erste Halteringklammer 22 im Bereich zwischen den beiden Raststufen 16 und 18.

In beiden erfindungsgemäßen Ausführungsvarianten ist es vorteilhaft, wenn das Gehäuseteil 2 aus zwei lösbar miteinander verbundenen Teilen besteht, und zwar aus einem Basisteil 28 und einem in eine Öffnung des Basisteils 28 eingesetzten Einsatzteil 30. Vorzugsweise sind diese beiden Teile 28, 30 über eine Gewindeverbindung verbunden, indem das Einsatzteil 30 als Einschraubteil mit einem Außengewinde in ein Innengewinde des Basisteils 28 eingeschraubt bzw. einschraubbar ist. Es kann jedoch auch eine beliebige andere Verbindung vorgesehen sein, wie z.B. eine Rast- bzw. Schnappverbindung und/oder eine Bajonettverbindung. Das Einsatzteil 30 ist im wesentlichen hohlzylindrisch ausgebildet und weist im Bereich seiner Innenfläche durch eine entsprechende Durchmessererweiterung die erste Raststufe 16 auf. Die zweite Raststufe 18 wird dann vorteilhafterweise von der in das Basisteil 28 weisenden Stirnfläche des Einsatzteils 30 gebildet. Aufgrund dieser bevorzugt vorgesehenen Zweiteiligkeit des Gehäuseteils 2 ist ein Lösen der Verbindung nach dem Einstecken möglich, indem das Einsatzteil 30 vom Basisteil 28 gelöst und dann zusammen mit dem Steckerteil 4 entnommen wird.

Insbesondere für die Ausführungsform nach Fig. 4 bis 6 ist es vorteilhaft, wenn axial zwischen dem Einsatzteil 30 und einer gegenüberliegenden Stufenfläche 32 des Basisteils 28 eine Innenringnut 34 gebildet ist, die dann insbesondere zur lagernden Aufnahme des zweiten Halteelementes bzw. der zweiten Halteringklammer 24 dient. Für die Ausführungsform nach Fig.1 bis 3 kann dieses Ausgestaltungsmerkmal jedoch ebenfalls vorgesehen sein, wobei dann das (einzige) Halteelement bzw. die (einzige) Halteringklammer 22 rastend in die Innenringnut 34 eingreift, d.h. die zweite Raststufe 18 hintergreift. Obwohl hierbei somit das Gehäuseteil 2 die Innenringnut 34 aufweist, ist die Kontur der Aufnahmeöffnung 8 dennoch sehr einfach herstellbar, und zwar wegen der Zweiteiligkeit des Gehäuseteils 2 aus Basisteil 28 und Einsatzteil 30. Ferner wird durch diese Zweiteiligkeit im Falle der Ausführung nach Fig. 4 bis 6 die Montage der zweiten Halteringklammer 24 vereinfacht.

Bevorzugt ist die bzw. jede Halteringklammer 22, 24 als Formteil aus Kunststoff gebildet. Jede Halteringklammer 22, 24 weist einen den Ringumfang unterbrechenden Schlitzbereich auf, wodurch sie radialelastisch spreizbar bzw. verengbar ist (in der Zeichnung nicht erkennbar). Es ist besonders vorteilhaft, wenn die bzw. jede Halteringklammer 22, 24 einen rechteckigen Ringquerschnitt aufweist (bezogen auf die Schnittebene in axialer bzw. radialer Richtung; vgl. die Zeichnungsfiguren). Diese Ausführung ist für die Arretierungseigenschaften (Rastverhalten, Haltekräfte) vorteilhaft.

In einer weiteren, in der Zeichnung nicht zu erkennenden Ausgestaltung der Erfindung ist die bzw. jede Halteringklammer 22,24 durch mindestens Dreipunktanlage (mindestens drei über den Umfang verteilte Anlagepunkte) zur Gehäuseteil-Aufnahmeöffnung 8 bzw. zum Steckerschaft 6 bezüglich der Steckachse zentriert gehalten. Diese Anlagepunkte können beispielsweise im etwa mittigen Ringbereich dem Schlitz gegenüberliegend einerseits und im Bereich der dem Schlitz benachbarten freien Ringenden andererseits angeordnet sein. In den dann jeweils dazwischenliegenden Bereichen ist die Radialelastizität gewährleistet.

Gemäß einer weiteren vorteilhaften Ausgestaltung der Erfindung ist innerhalb der Aufnahmeöffnung 8 auf einer Stufenfläche 36 ein bevorzugt als gummielastisches Pufferelement ausgebildetes Federelement 38 derart angeordnet, daß in der Vollraststellung (Fig. 3, 6) das Steckerteil 4 durch Anlage des Steckerschaftes 6 an dem Federelement 38 mit einer axial entgegen der Einsteckrichtung wirkenden Kraft F beaufschlagt wird, so daß die Halteringklammer 22 (Fig. 3) bzw. die zweite Halteringklammer 24 (Fig. 6) trotz eines grundsätzlich vorhandenen Axialspiels in Anlage an der zweiten Raststufe 18 gehalten wird.

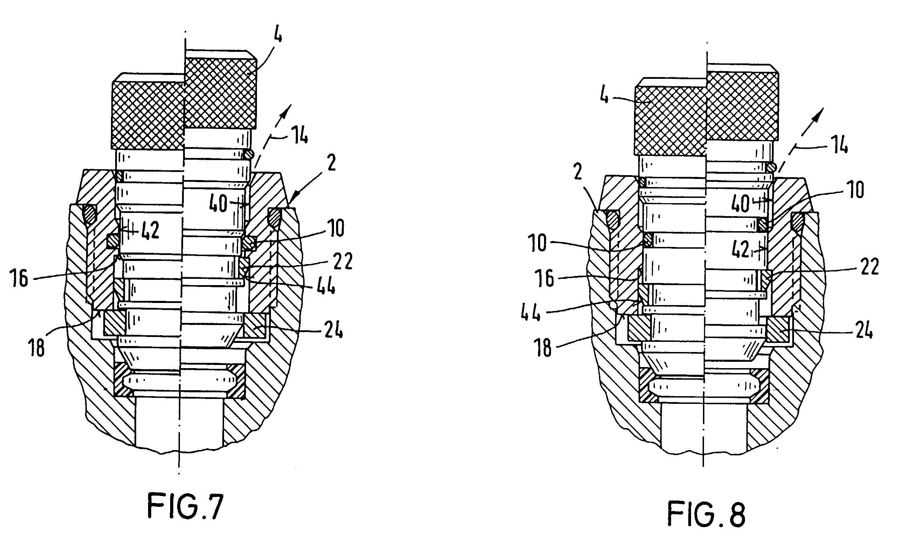

Die Ausführungen gemäß Fig. 7 und 8 entsprechen weitgehend der Ausführung nach Fig. 4 bis 6. Allerdings ist hierbei zusätzlich vorgesehen, daß die Aufnahmeöffnung 8 des Gehäuseteils 2 einstecköffnungsseitig einen erweiterten Abschnitt 40 aufweist, der in einen verengten Abschnitt 42 übergeht, der sich dann über die erste Raststufe 16 wieder erweitert. In diesem Fall besitzt die erste Halteringklammer 22 auf ihrer in Einsteckrichtung weisenden Seite eine schräge, "konische" Fläche 44, die zum elastischen Verengen der Halteringklammer 22 mit der zwischen den Abschnitten 40 und 42 liegenden Stufe zusammenwirkt.Gemäß Fig. 7 ist hierbei die Umfangsdichtung 10 (bzw. eine der beiden Dichtungen 10) in einer Ringnut im Bereich des verengten Abschnittes 42 im Gehäuseteil 2 angeordnet, wodurch sie gut gegen die in der Vorraststellung auftretende Druckmittelströmung (Pfeil 14) geschützt ist. Im Falle der Fig. 8 ist die entsprechende Umfangsdichtung 10 in einer Ringnut am Steckerschaft 6 angeordnet.

Die Erfindung ist nicht auf die dargestellten und beschriebenen Ausführungsbeispiele beschränkt. So können als Halteelement(e) praktisch beliebige elastisch verformbare, insbesondere ring- und/oder klammerförmige Elemente verwendet werden, wie z.B. auch Federringe, Sprengringe und dergleichen.

## Patentansprüche

1. Steckkupplung für Druckmittelsysteme, bestehend aus einem Gehäuseteil (2) und einem Steckerteil (4), wobei das Steckerteil (4) mit einem Steckerschaft (6) über mindestens eine Umfangsdichtung (10) abgedichtet in eine Aufnahmeöffnung (8) des Gehäuseteils (2) einsteckbar und über eine Verriegelungseinrichtung (12) gegen Lösen arretierbar ist, wobei die Verriegelungseinrichtung (12) derart ausgebildet ist, daß gehäuseseitig eine teilgesteckte Vorraststellung, welche einer ersten Rastausnehmung zugeordnet ist, und eine ganz gesteckte Vollraststellung, welche einer zweiten Rastausnehmung zugeordnet ist, gewährleistet sind, wobei in der Vorraststellung eine derart unvollständige Abdichtung vorliegt, daß im Falle einer Druckbeaufschlagung mit einem Druckmedium ein Signal, insbesondere ein akustisch wahrnehmbares Leckgeräusch, erzeugt wird, und wobei in der Vollraststellung eine vollständige, druckdichte Abdichtung vorliegt, und die Verriegelungseinrichtung (12) steckerteilseitig aus einem in einer Außenringnut (20) des Steckerschaftes sitzenden, elastisch verformbaren Halteelement (22) besteht, wobei das Halteelement (22) zumindest für die Vorraststellung vorgesehen ist und dazu rastend mit der ersten Rastausnehmung zusammenwirkt,
**dadurch gekennzeichnet**, daß die erste Rastausnehmung gehäuseteilseitig aus einer ersten, den Querschnitt der Aufnahmeöffnung (8) erweiternden, der Vorraststellung zugeordneten Raststufe (16) und die zweite Rastausnehmung aus einer zweiten, den Querschnitt der Aufnahmeöffnung (8) ausgehend vom durch die erste Raststufe (16) erweiterten Querschnitt nochmals erweiternden, der Vollraststellung zugeordneten Raststufe (18) besteht.

2. Steckkupplung nach Anspruch 1,
**dadurch gekennzeichnet**, daß das Halteelement (22) zusätzlich auch für die Vollraststellung vorgesehen ist und dazu ausgehend von der Vorraststellung durch weitergehendes Stecken rastend mit der zweiten Raststufe (18) zusammenwirkt.

3. Steckkupplung nach Anspruch 1,
**dadurch gekennzeichnet**, daß für die Vollraststellung ein zweites elastisches Halteelement (24) vorgesehen ist, das innerhalb des Gehäuseteils (2) zur Abstützung an der zweiten Raststufe (18) gelagert ist und in der Vollraststellung mit einer zweiten Außenringnut (26) des Steckerschaftes (6) rastend zusammenwirkt.

4. Steckkupplung nach einem oder mehreren der Ansprüche 1 bis 3,
**dadurch gekennzeichnet**, daß das Gehäuseteil (2) aus zwei lösbar miteinander verbundenen Teilen besteht, und zwar aus einem Basisteil (28) und einem in eine Öffnung des Basisteils (28) eingesetzten Einsatzteil (30), wobei das Einsatzteil (30) im wesentlichen hohlzylindrisch ausgebildet ist und im Bereich seiner Innenfläche die erste Raststufe (16) aufweist sowie mit seiner in das Basisteil (28) weisenden Stirnfläche die zweite Raststufe (10) bildet.

5. Steckkupplung nach Anspruch 4,
**dadurch gekennzeichnet,** daß axial zwischen dem Einsatzteil (30) und einer Stufenfläche (32) des Basisteils (28) eine Innenringnut (34) gebildet ist, die zum rastenden Eingreifen des ersten Halteelementes (22) oder zur lagernden Aufnahme des zweiten Halteelementes (24) dient.

6. Steckkupplung nach einem oder mehreren der Ansprüche 1 bis 5,
**dadurch gekennzeichnet,** daß das erste Halteelement und/oder das zweite Halteelement als radialelastische Halteringklammer (22,24) ausgebildet sind/ist.

7. Steckkupplung nach einem oder mehreren der Ansprüche 1 bis 6,
**dadurch gekennzeichnet,** daß das/jedes Halteelement bzw. die/jede Halteringklammer (22, 24) als Formteil aus Kunststoff gebildet ist.

8. Steckkupplung nach einem oder mehreren der Ansprüche 1 bis 7,
**dadurch gekennzeichnet,** daß das/jedes Halteelement bzw. die/jede Halteringklammer (22, 24) einen rechteckigen Ringquerschnitt aufweist.

9. Steckkupplung nach einem oder mehreren der Ansprüche 1 bis 8,
**dadurch gekennzeichnet** , daß das/jedes Halteelement bzw. die/jede Halteringklammer (22, 24) durch zumindest Dreipunktanlage bezüglich der Steckachse zentriert ist.

## Claims

1. Push-in coupling for pressure-medium systems, consisting of a housing part (2) and a plug part (4), in which arrangement the plug part (4) can be inserted into a location opening (8) in the housing part (2) with a plug shank (6) in such a way as to be sealed off via at least one circumferential seal (10) and can be locked against release via a locking device (12), the locking device (12) being designed in such a way that a partly inserted pre-latched position, which is assigned to a first latching recess, and a fully inserted, fully latched position, which is assigned to a second latching recess, are ensured on the housing side, there being such an incomplete sealing in the pre-latched position that, in the event of pressurizing with pressure medium, a signal, in particular an acoustically perceptible leakage noise, is produced, and there being a complete, pressure-tight sealing in the fully latched position, and the locking device (12), on the plug-part side, consisting of an elastically deformable retaining element (22) which sits in an outer annular groove (20) of the plug shank, the retaining element (22) being provided at least for the pre-latched position and to this end interacts in a latching manner with the first latching recess, characterized in that the first latching recess, on the housing-part side, consists of a first latching step (16) widening the cross-section of the location opening (8) and assigned to the pre-latched position, and the second latching recess consists of a second latching step (18) again widening the cross-section of the location opening (8), starting from the cross-section widened by the first latching step (16), and assigned to the fully latched position.

2. Push-up coupling according to claim 1, characterized in that the retaining element (22) is additionally also provided for the fully latched position and to this end, starting from the pre-latched position, interacts in a latching manner with the second latching step (18) by being pushed in further.

3. Push-in coupling according to Claim 1, characterized in that a second elastic retaining element (24) is provided for the fully latched position, which retaining element (24) is mounted inside the housing part (2) for supporting on the second latching step (18) and interacts in a latching manner in the fully latched position with a second outer annular groove (26) of the plug shank (6).

4. Push-in coupling according to one or more of Claims 1 to 3, characterized in that the housing part (2) consists of two parts detachably connected to one another, specifically a base part (28) and an insert part (30) inserted into an opening of the base part (28), the insert part (30) being of essentially hollow-cylindrical design and having the first latching step (16) in the region of its inner surface as well as forming the second latching step (10) with its end face which points into the base part (28).

5. Push-in coupling according to Claim 4, characterized in that an inner annular groove (34) is formed axially between the insert part (30) and a step surface (32) of the base part (28) and serves for the latching engagement of the first retaining element (22) or to mount the second retaining element (24).

6. Push-in coupling according to one or more of Claims 1 to 5, characterized in that the first retaining element and/or the second retaining element are/is designed as a radially elastic retaining-ring clip (22, 24).

7. Push-in coupling according to one or more of Claims 1 to 6, characterized in that the/each retaining element or the/each retaining-ring clip (22, 24) is formed as a plastic mouldinq.

8. Push-in coupling according to one or more of Claims 1 to 7, characterized in that the/each retaining element or the/each retaining-ring clip (22, 24) has a rectangular annular cross-section.

9. Push-in coupling according to one or more of Claims 1 to 8, characterized in that the/each retaining element or the/each retaining-ring clip (22, 24) is centred relative to the push-in axis by at least three-point contact.

## Revendications

1. Raccord enfichable pour systèmes sous pression, comprenant un élément de boîtier (2), et un élément de fiche (4), l'élément de fiche (4) pouvant être enfiché de manière étanche par une tige (6) dans une ouverture de réception (8) de l'élément de boîtier (2), grâce à au moins un moyen d'étanchéité périphérique (10), et être verrouillé de manière indesserrable à l'aide d'un moyen de verrouillage (12), le moyen de verrouillage (12) étant réalisé de manière à assurer, coté boîtier, une position de pré-arrêt partiellement enfichée associée à un premier évidement d'arrêt, et une position de verrouillage complet totalement enfichée associée à un deuxième évidement d'arrêt, l'étanchéité étant incomplète dans la position de pré-arrêt, de manière à ce qu'en cas d'application d'une pression par un agent de pression, un signal, en particulier un bruit de fuite perceptible acoustiquement, soit engendré, une étanchéité totale à la pression étant obtenue dans la position de verrouillage complet, le moyen de verrouillage (12) comportant côté élément de fiche, un élément de maintien (22) élastiquement déformable disposé dans une rainure annulaire externe (20) de la tige de fiche, cet élément de maintien (22) étant prévu au moins pour la position de pré-arrêt et coopérant à cet effet de manière encliquetable avec le premier évidement d'arrêt,
caractérisé en ce que le premier évidement d'arrêt comprend côté boîtier, un premier redan d'arrêt (16) élargissant la section de l'ouverture de réception (8), et associé à la position de pré-arrêt, et que le deuxième évidement d'arrêt comprend un deuxième redan d'arrêt (18) élargissant encore la section de l'ouverture de réception (8) à partir de la section élargie par le premier redan d'arrêt (16), ce redan (18) étant associé à la position de verrouillage complet.

2. Raccord emboîtable selon la revendication 1,
caractérisé en ce que l'élément de maintien (22) est en plus prévu pour la position d'arrêt complet, et coopère à cet effet, à partir de la position de pré-arrêt, de manière encliquetable avec le deuxième redan d'arrêt (18), grâce à un enfichage plus prononcé.

3. Raccord enfichable selon la revendication 1,
caractérisé en ce que, pour la position de verrouillage complet, un deuxième élément de maintien élastique (24) est prévu qui est monté à l'intérieur de l'élément de boîtier (2) pour s'appuyer sur le deuxième redan d'arrêt (18), et qui coopère dans la position d'arrêt complet de manière encliquetable avec une deuxième rainure annulaire exteme (26) de la tige de fiche (6).

4. Raccord enfichable selon l'une ou plusieurs des revendications 1 à 3,
caractérisé en ce que l'élément de boîtier (2) comprend deux éléments reliés entre eux de manière desserrable, à savoir un élément de base (28), et un élément (30) inséré dans l'ouverture de l'élément de base (28), l'élément inséré (30) ayant sensiblement la forme d'un cylindre creux et présentant dans la région de sa surface inteme le premier redan d'arrêt (16), cet élément formant le deuxième redan d'arrêt (18) à l'aide de sa face frontale dirigée vers l'intérieur de l'élément de base (28).

5. Raccord enfichable selon la revendication 4,
caractérisé en ce qu'une rainure annulaire interne (34) est formée axialement entre l'élément inséré (30) et une surface de redan (32) de l'élément de base (28), cette rainure servant à l'engagement encliquetable du premier élément de maintien (22) ou d'appui au deuxième élément de maintien (24).

6. Raccord enfichable selon l'une ou plusieurs des revendications 1 à 5,
caractérisé en ce que le premier élément de maintien et/ou le deuxième élément de maintien ont la forme d'une bride annulaire de maintien radialement élastique (22, 24).

7. Raccord enfichable selon l'une ou plusieurs des revendications 1 à 6,
caractérisé en ce que le/chaque élément de maintien ou la/chaque bride annulaire de maintien (22, 24) est un élément moulé en une matière synthétique.

8. Raccord enfichable selon l'une ou plusieurs des revendications 1 à 7,
caractérisé en ce que le/chaque élément de maintien ou la/chaque bride annulaire de maintien (22, 24) présente une coupe transversale rectangulaire.

9. Raccord enfichable selon l'une ou plusieurs des revendications 1 à 8,
caractérisé en ce que le/chaque élément de maintien ou la/chaque bride annulaire de maintien (22, 24) est centré par rapport à l'axe d'enfichage par au moins une application en trois points.
